# EUROPEAN PATENT SPECIFICATION

(11) **EP 2 607 809 B1**
(45) Date of publication and mention of the grant of the patent: **13.05.2020**
(21) Application number: 12195566.0
(22) Date of filing: 04.12.2012
(51) Int. Cl.: F24H 4/02, F24H 9/20, F24D 3/18, F24D 19/10, F25B 49/02, F25B 40/02

(54) **Hydronic heater**
Hydronisches Heizgerät
Chauffage hydronique

(30) Priority: 19.12.2011 JP 2011276793
(43) Date of publication of application: 26.06.2013
(73) Proprietor: Panasonic Corporation, Kadoma-shi Osaka 571-8501 (JP)
(72) Inventor: Mekata, Masato, Osaka, 540-6207 (JP); Arashima, Hiroshi, Osaka, 540-6207 (JP)
(74) Representative: Eisenführ Speiser

(56) References cited:
- EP-A2- 0 751 356
- EP-A2- 1 647 783
- JP-A- 2002 081 767
- JP-A- 2008 082 601

## Description

### [Technical Field]

The present invention relates to a hydronic heater which produces hot water by a heat pump.

### [Background Technique]

At present, most hydronic heaters heat water using a gas heater or an electric heater, but hydronic heaters utilizing a heat pump also gradually have become widespread from the standpoint of recent requirement of enhancement of energy utilization.

Fig. 7 is a block diagram of a conventional hydronic heater (e.g., patent document 1).

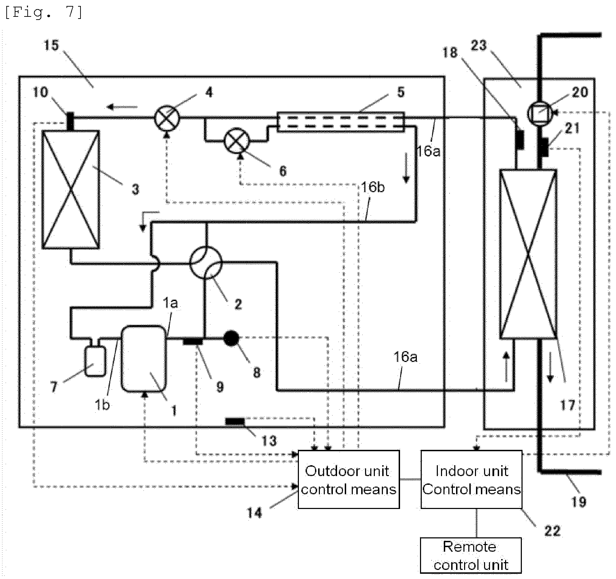

As shown in Fig. 7, the hydronic heater includes a main refrigerant circuit which is annularly formed by connecting, to one another through a main refrigerant pipe 16a, a compressor 1, a refrigerant-water heat exchanger 17, a supercooling heat exchanger 5, main decompressing means 4, and a refrigerant-air heat exchanger 3 in this order. A four-way valve 2 is connected to the main refrigerant pipe 16a which is connected to a discharge portion 1a of the compressor 1 and the main refrigerant pipe 16a which is connected to a suction portion 1b of the compressor 1. An accumulator 7 which holds a surplus refrigerant is connected to the main refrigerant pipe 16a extending between the suction portion 1b of the compressor 1 and the four-way valve 2.

The hydronic heater includes a bypass circuit having a bypass pipe 16b. The bypass pipe 16b branches off from the main refrigerant pipe 16a extending between the refrigerant-water heat exchanger 17 and the main decompressing means 4, and is connected, through the supercooling heat exchanger 5, to the main refrigerant pipe 16a extending between the refrigerant-air heat exchanger 3 and the compressor 1. A portion of the bypass pipe 16b upstream of the supercooling heat exchanger 5 is provided with bypass decompressing means 6.

The hydronic heater is composed of an outdoor unit 15 and an indoor unit 23.

The compressor 1, the four-way valve 2, the refrigerant-air heat exchanger 3, the main decompressing means 4, the supercooling heat exchanger 5, the bypass decompressing means 6 and the accumulator 7 are provided in the outdoor unit 15.

The outdoor unit 15 includes high pressure detecting means 8, discharge temperature detecting means 9, evaporation temperature detecting means 10, outside air temperature detecting means 13 and outdoor unit control means 14.

The high pressure detecting means 8 and the discharge temperature detecting means 9 are disposed in the main refrigerant pipe 16a extending from the discharge portion 1a of the compressor 1 to the four-way valve 2. The evaporation temperature detecting means 10 is disposed in the refrigerant-air heat exchanger 3. The outside air temperature detecting means 13 detects an outside air temperature around the outdoor unit 15. The outdoor unit control means 14 controls the compressor 1, the main decompressing means 4 and the bypass decompressing means 6 in accordance with values measured by the high pressure detecting means 8, the discharge temperature detecting means 9, the evaporation temperature detecting means 10 and the outside air temperature detecting means 13.

The refrigerant-water heat exchanger 17 is provided in the indoor unit 23.

The indoor unit 23 includes refrigerant outlet temperature detecting means 18, a circulation pump 20, water temperature detecting means 21 and indoor unit control means 22.

The refrigerant outlet temperature detecting means 18 is disposed at an outlet of the refrigerant-water heat exchanger 17. The circulation pump 20 is connected to a water pipe path 19 of the refrigerant-water heat exchanger 17 to circulate water. The water temperature detecting means 21 detects a temperature of water flowing into the refrigerant-water heat exchanger 17. The indoor unit control means 22 is connected to the outdoor unit control means 14, inputs a measured value of the water temperature detecting means 21, and controls the circulation pump 20.

When a heating operation is carried out by a hydronic heater which utilizes a heat pump, a refrigerant whose temperature and pressure are increased by the compressor 1 is heat-exchanged with water by the refrigerant-water heat exchanger 17 through the main refrigerant pipe 16a from the four-way valve 2.

As a result, the water is heated and becomes hot water, and a temperature of the refrigerant is reduced at the same time. The heated hot water is sent to a hot water tank or a floor heating panel (not shown) and utilized for hot water supply or room heating.

The refrigerant whose temperature is reduced becomes a gas-liquid two phase low temperature and low pressure refrigerant by the main decompressing means 4, and the refrigerant is sent to the refrigerant-air heat exchanger 3 through the main refrigerant pipe 16a.

The refrigerant-air heat exchanger 3 forcibly draws heat from atmosphere and the refrigerant evaporates, and then vaporizes. The evaporated refrigerant passes through the accumulator 7 from the four-way valve 2, the refrigerant is again sucked into the compressor 1 and compressed, and becomes a high temperature and high pressure refrigerant.

To secure high heating ability while securing reliability of the compressor 1, the hydronic heater is provided with the supercooling heat exchanger 5 and the bypass decompressing means 6, and adjusts a throttle amount of the bypass decompressing means 6, thereby controlling a heat exchanging amount of the supercooling heat exchanger 5.

### [Prior Art Document]

### [Patent Document]

[Patent Document 1] Japanese Patent Application Laid-open No.H10-68553
EP 1 647 783 A2 discloses a hydronic heater having the features in the preamble of claim 1.

### [Summary of the Invention]

### [Problem to be Solved by the Invention]

However, a length of the main refrigerant pipe 16a which connects the outdoor unit 15 and the indoor unit 23 to each other is varied depending upon an installation place. When the main refrigerant pipe 16a becomes long, since a circulation amount of a refrigerant flowing through a refrigeration cycle is reduced, it is difficult to efficiently operate the refrigeration cycle.

To efficiently operate the refrigeration cycle, it is necessary to operate it using an optimal control value suitable for an outside air temperature.

The present invention has been accomplished to solve the conventional problem, and it is an object of the invention to provide a hydronic heater in which a system efficiency is enhanced by setting a target supercooling degree based on an outside air temperature, and by operating the hydronic heater using the set supercooling degree.

### [Means for Solving the Problem]

To solve the conventional problem, the present invention provides a hydronic heater comprising: a main refrigerant circuit formed by annularly connecting, to one another through a main refrigerant pipe, a compressor, a refrigerant-water heat exchanger, a supercooling heat exchanger, main decompressing means and an evaporator in this order; a bypass circuit including a bypass pipe which branches off from the main refrigerant pipe extending between the refrigerant-water heat exchanger and the main decompressing means, and which is connected to the main refrigerant pipe extending between the evaporator and the compressor through the supercooling heat exchanger; bypass decompressing means provided in the bypass pipe located upstream from the supercooling heat exchanger; outside air temperature detecting means which detects an outside air temperature; water temperature detecting means which detects an entering-water temperature of the refrigerant-water heat exchanger; and control means being adapted to operate a bypass control operation for heat exchanging of a refrigerant carried out by the supercooling heat exchanger, wherein the control means starts a bypass control operation if the outside air temperature detecting means detects a state where the outside air temperature is lower than a given value and if the water temperature detecting means detects a state where a water temperature exceeds a given value, the control means sets a target value of a supercooling degree of a refrigerant at an outlet of the refrigerant-water heat exchanger at the time of the bypass control operation, such that it judges as to whether or not the outside air temperature detected by the outside air temperature detecting means is more than a threshold value, and the supercooling degree becomes greater, rather when the outside air temperature is less than the threshold value rather than the outside air temperature is more than the threshold value, the control means is configured to control such that when the supercooling degree of the refrigerant at the outlet of the refrigerant-water heat exchanger at the time of the bypass control operation is smaller than the target value, an opening degree of the bypass decompressing means is adjusted toward its close side while adjusting an opening degree of the main decompressing means toward its open side, thereby increasing the supercooling degree, and the control means is configured to control such that when the supercooling degree of the refrigerant at the outlet of the refrigerant-water heat exchanger at the time of the bypass control operation is greater than the target value, the opening degree of the bypass decompressing means is adjusted toward its open side while adjusting the opening degree of the main decompressing means toward its close side, thereby reducing the supercooling degree.

According to this configuration, the supercooling degree is controlled to the optimal value which is set for each of the outside air temperatures in accordance with the outside air temperature detected by the outside air temperature detecting means. Therefore, it is possible to secure heating ability which is necessary for each of the respective outside air temperatures, and to enhance the efficiency of the cooling system.

### [Effect of the Invention]

According to the present invention, it is possible to provide a hydronic heater in which the system efficiency is enhanced by setting a target supercooling degree based on an outside air temperature, and by operating the hydronic heater using the set supercooling degree.

### [Brief Description of the Drawings]

Fig. 1 is a block diagram of a hydronic heater according to a first embodiment of the present invention;
Fig. 2 is a flowchart of operation control of the hydronic heater;
Fig. 3 is a Mollier diagram of a refrigerant circuit of the hydronic heater;
Fig. 4 is a flowchart of operation control of a hydronic heater according to a second embodiment of the invention;
Fig. 5 is a flowchart of operation control of another hydronic heater;
Fig. 6 is a Mollier diagram of a refrigerant circuit of the hydronic heater; and
Fig. 7 is a block diagram of a conventional hydronic heater.

### [Explanation of Symbols]

- 1: compressor
- 3: refrigerant-air heat exchanger (evaporator)
- 4: main decompressing means
- 5: supercooling heat exchanger
- 6: bypass decompressing means
- 8: high pressure detecting means
- 10: evaporation temperature detecting means
- 13: outside air temperature detecting means
- 14: refrigerant circuit control means
- 15: refrigerant circuit
- 16a: main refrigerant pipe
- 16b: bypass pipe
- 17: refrigerant-water heat exchanger (radiator)
- 18: refrigerant outlet temperature detecting means
- 19: water pipe path
- 20: circulation pump
- 30: refrigerant circuit
- 40: hot water circuit
- 21: water temperature detecting means
- 22: hot water circuit control means

### [Mode for Carrying out the Invention]

A first aspect of the present invention provides a hydronic heater comprising: a main refrigerant circuit formed by annularly connecting, to one another through a main refrigerant pipe, a compressor, a refrigerant-water heat exchanger, a supercooling heat exchanger, main decompressing means and an evaporator in this order; a bypass circuit including a bypass pipe which branches off from the main refrigerant pipe extending between the refrigerant-water heat exchanger and the main decompressing means, and which is connected to the main refrigerant pipe extending between the evaporator and the compressor through the supercooling heat exchanger; bypass decompressing means provided in the bypass pipe located upstream from the supercooling heat exchanger; outside air temperature detecting means which detects an outside air temperature; and control means, wherein based on the outside air temperature detected by the outside air temperature detecting means, the control means changes a target value of a supercooling degree of a refrigerant at an outlet of the refrigerant-water heat exchanger when the hydronic heater is operated.

According to this aspect, the supercooling degree is controlled to the optimal value which is set for each of the outside air temperatures in accordance with the outside air temperature detected by the outside air temperature detecting means. Therefore, it is possible to secure heating ability which is necessary for each of the respective outside air temperatures, and to enhance the efficiency of the cooling system.

According to a second aspect of the invention, in the first aspect, the hydronic heater further includes water temperature detecting means which detects an entering-water temperature of the refrigerant-water heat exchanger, and based on the entering-water temperature detected by the water temperature detecting means, the control means changes the target value of the supercooling degree of the refrigerant at the outlet of the refrigerant-water heat exchanger when the hydronic heater is operated.

According to this aspect, it is possible to optimize the heating ability of each of the outside air temperatures and each of the water temperatures, and to enhance the efficiency of the refrigeration cycle.

According to a third aspect of the invention, in the first or second aspect, the control means changes an opening degree of the main decompressing means and an opening degree of the bypass decompressing means such that the supercooling degree of the refrigerant at the outlet of the refrigerant-water heat exchanger when the hydronic heater is operated becomes equal to the target value.

According to this aspect, it is possible to secure heating ability required for each of the outside air temperatures, and to enhance efficiency of the refrigeration system at the same time.

Embodiments of the present invention will be described below with reference to the drawings. The invention is not limited to the embodiments.

### (First Embodiment)

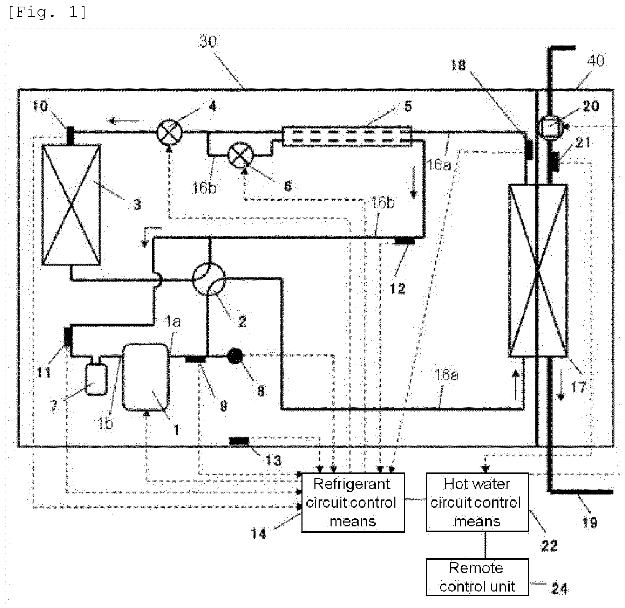

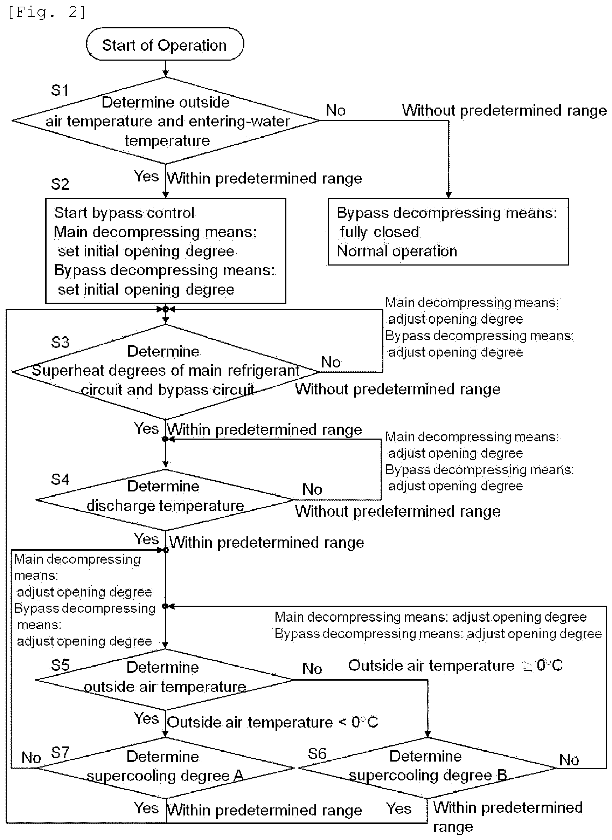

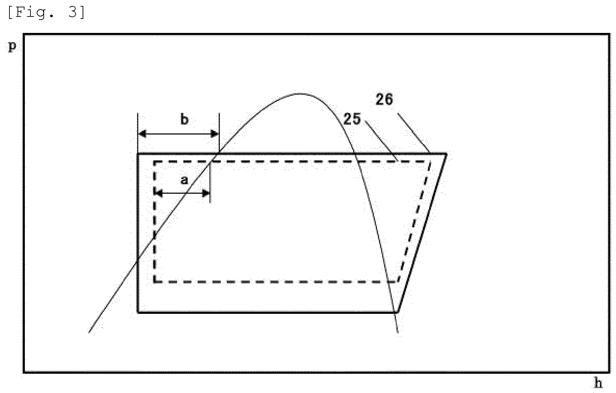

Fig. 1 is a block diagram of a hydronic heater according to a first embodiment of the present invention. Fig. 2 is a flowchart when the hydronic heater of the first embodiment of the invention is controlled. Fig. 3 is a Mollier diagram in the first embodiment of the invention.

The hydronic heater includes a refrigerant circuit 30 and a hot water circuit 40. The refrigerant circuit 30 includes a main refrigerant circuit and a bypass circuit.

The main refrigerant circuit is formed by annularly connecting, to one another through main refrigerant pipes 16a, a compressor 1, a four-way valve 2, a refrigerant-water heat exchanger 17 which is a radiator, main decompressing means 4, a refrigerant-air heat exchanger 3 which is an evaporator, and an accumulator 7 which holds a surplus refrigerant in this order. The supercooling heat exchanger 5 is disposed between the refrigerant-water heat exchanger 17 and the main decompressing means 4. The four-way valve 2 is connected to the main refrigerant pipe 16a connected to a discharge portion 1a of the compressor 1 and to the main refrigerant pipe 16a connected to a suction portion 1b of the compressor 1.

The bypass circuit is composed of a bypass pipe 16b. The bypass pipe 16b branches off from the main refrigerant pipe 16a extending between the supercooling heat exchanger 5 and the main decompressing means 4, and is connected to the main refrigerant pipe 16a extending between the refrigerant-air heat exchanger 3 and the compressor 1 through the supercooling heat exchanger 5. The bypass decompressing means 6 is provided in the bypass pipe 16b upstream of the supercooling heat exchanger 5.

A refrigerant flowing through the bypass pipe 16b is decompressed by the bypass decompressing means 6, and is heat-exchanged with a refrigerant flowing through the main refrigerant pipe 16a by the supercooling heat exchanger 5.

In this embodiment, an outlet side end of the bypass pipe 16b is connected to the main refrigerant pipe 16a extending from the four-way valve 2 to the accumulator 7. The outlet side end of the bypass pipe 16b is connected to the main refrigerant pipe 16a extending from the refrigerant-air heat exchanger 3 to the suction portion 1b of the compressor 1.

The main refrigerant pipe 16a extending from the discharge portion 1a of the compressor 1 to the four-way valve 2 is provided with high pressure detecting means 8 which detects a pressure of a discharged refrigerant, and discharge temperature detecting means 9 which detects a temperature of the discharged refrigerant. A refrigerant-inflow side pipe of the refrigerant-air heat exchanger 3 or the main refrigerant pipe 16a extending from the main decompressing means 4 to the refrigerant-air heat exchanger 3 is provided with evaporation temperature detecting means 10 which detects an evaporation temperature. A refrigerant-outflow side pipe of the refrigerant-air heat exchanger 3 or the main refrigerant pipe 16a extending from the refrigerant-air heat exchanger 3 to the accumulator 7 is provided with evaporator outlet temperature detecting means 11 which detects an evaporator outlet temperature.

A portion of the bypass pipe 16b which is located downstream from the supercooling heat exchanger 5 is provided with bypass circuit outlet temperature detecting means 12 which detects a temperature of a refrigerant flowing through the bypass pipe 16b after the refrigerant heat-exchanges by the supercooling heat exchanger 5. An outlet side refrigerant pipe of the refrigerant-water heat exchanger 17 or the main refrigerant pipe 16a extending from the refrigerant-water heat exchanger 17 to the supercooling heat exchanger 5 is provided with refrigerant outlet temperature detecting means 18 which detects a temperature of a refrigerant after the refrigerant heat-exchanges by the refrigerant-water heat exchanger 17. The hydronic heater is provided with outside air temperature detecting means 13 which detects an outside air temperature.

The hot water circuit 40 includes a circulation pump 20 which is connected to a water pipe path 19 of the refrigerant-water heat exchanger 17 and which circulates water, and water temperature detecting means 21 which detects a temperature of water flowing into the refrigerant-water heat exchanger 17. The water pipe path 19 of the hot water circuit 40 is connected to a hot water take or a floor heating panel (not shown) . The hydronic heater includes refrigerant circuit control means 14 and hot water circuit control means 22.

According to the hydronic heater of the embodiment, if information such as a predetermined boiling temperature is transmitted to the hot water circuit control means 22 through a remote control unit 24, the information is sent from the hot water circuit control means 22 to the refrigerant circuit control means 14, and operation frequency of the compressor 1 and a throttle amount of the main decompressing means 4 are adjusted.

High temperature and high pressure refrigerant gas discharged from the compressor 1 flows into the refrigerant-water heat exchanger 17, and heats water sent from the circulation pump 20 through the hot water tank or the floor heating panel (not shown).

The refrigerant which heat-exchanges with water by the refrigerant-water heat exchanger 17 is lowered in temperature and is liquefied. The liquefied refrigerant is sent to the main decompressing means 4 and decompressed and then, heat-exchanges with air by the refrigerant-air heat exchanger 3, and absorbs heat from air when the refrigerant is evaporated.

The evaporated refrigerant again returns to the compressor 1 through the accumulator 7.

A control operation of the hydronic heater of the embodiment will be described based on Fig. 2.

If the operation of the hydronic heater of the embodiment is started, it is determined whether bypass control should be carried out based on an outside air temperature detected by the outside air temperature detecting means 13 and a water temperature detected by the water temperature detecting means 21 (step 1).

In step 1, if the outside air temperature detecting means 13 detects a state where the outside air temperature is lower than a given value (e.g., 10°C) and if the water temperature detecting means 21 detects, for given time (e.g., five minutes), a state where a water temperature exceeds a given value (e.g., 25°C), a bypass control operation for heat exchanging of a refrigerant carried out by the supercooling heat exchanger 5 is started (step 2).

In step 1, if the above condition is not satisfied, the bypass decompressing means is fully closed, the bypass control operation is not carried out, and a normal operation is carried out only by the main refrigerant circuit.

If the bypass control operation in step 2 is started, an initial opening degree corresponding to an outside air temperature and an entering-water temperature is given to the main decompressing means 4 and the bypass decompressing means 6, and a refrigerant circulation amount is adjusted.

If the operation is continued in this state, a superheat degree of the main refrigerant circuit which is a temperature difference between an average evaporation temperature (Tem, hereinafter) calculated from an actually measured value measured by the evaporation temperature detecting means 10 and an evaporation temperature detected by the evaporator outlet temperature detecting means 11 approaches a value close to zero. A superheat degree of a bypass circuit which is a temperature difference between the Tem and a refrigerant temperature detected by the bypass circuit outlet temperature detecting means 12 disposed at the outlet of the bypass circuit approaches a value which largely exceeds zero.

To carry out an efficient operation, it is necessary to control both the superheat degree of the main refrigerant circuit and the superheat degree of the bypass circuit to a value close to zero. Hence, the opening degree of the main decompressing means 4 is adjusted toward its close side, an amount of a refrigerant flowing to the main refrigerant circuit is reduced, thereby increasing an amount of a refrigerant flowing to the bypass circuit 29, and bringing the superheat degree of the bypass circuit close to zero.

In step 3, the superheat degrees of the main refrigerant circuit and the bypass circuit are determined, a valve opening degree of the main decompressing means 4 and a valve opening degree of the bypass decompressing means 6 are adjusted such that the superheat degree of the main refrigerant circuit and the superheat degree of the bypass circuit come close to zero.

In step 3, the superheat degree of the main refrigerant circuit and the superheat degree of the bypass circuit are stabilized at the values close to zero, a control operation is carried out so that a temperature of a refrigerant discharged from the compressor 1 is brought into an appropriate value (step 4) .

A target discharged refrigerant temperature (Tdm, hereinafter) is expressed as a function of an average condensation temperature (Tcm, hereinafter) calculated from the Tem and an actually measured value detected by the high pressure detecting means 8. As the outside air temperature and the entering-water temperature are varied, the Tem and the Tcm are varied, and the Tdm is also varied.

When a temperature detected by the discharge temperature detecting means 9 (Td, hereinafter) is lower than the Tdm, the opening degree of the bypass decompressing means 6 is adjusted toward its close side in a state where the opening degree of the main decompressing means 4 is fixed, thereby adjusting the entire refrigerant circulation amount and bringing the Td close to the Tdm.

When the Td is higher than the Tdm, the opening degree of the bypass decompressing means 6 is adjusted toward its open side in a state where the opening degree of the main decompressing means 4 is fixed, thereby adjusting the entire refrigerant circulation amount and bringing the Td close to Tdm.

In step 4, if the Td and the Tdm are stabilized at given values (e.g., ±1K), a supercooling degree calculated from the Tcm and a measured value measured by the refrigerant outlet temperature detecting means 18 is adjusted to a target value. When the calculated supercooling degree is smaller than a target value, the opening degree of the bypass decompressing means 6 is adjusted toward its close side while adjusting the opening degree of the main decompressing means 4 toward its open side, thereby controlling the supercooling degree to increase while keeping the Td at the given value.

When the calculated supercooling degree is greater than the target value, the opening degree of the bypass decompressing means 6 is adjusted toward its open side while adjusting the opening degree of the main decompressing means 4 toward its close side, thereby controlling the supercooling degree to reduce while keeping the Td at the given value.

When a load is varied and the superheat degree of the main refrigerant circuit or the superheat degree of the bypass circuit exceeds a given value (e.g., 2K), the superheat degrees of both the main refrigerant circuit and the bypass circuit are adjusted to zero.

Next, the outside air temperature is determined in step 5.

If the outside air temperature is reduced as shown in Fig. 3, the refrigeration cycle is changed from a high outside air temperature-time cycle 25 to a low outside air temperature-time cycle 26. When the outside air temperature is low, if attempt is made to obtain the same heating ability as that when the outside air temperature is high, an evaporation pressure is lowered and a compression ratio is increased correspondingly, and a condensation pressure is increased. Therefore, there is a tendency that the optimal value of the supercooling degree is increased from a to b.

Hence, a threshold value (e.g., 0°C) is provided for an outside air temperature, and when a current outside air temperature is equal to or higher than 0°C, a target value of the supercooling degree is set to 4 to 7K as supercooling degree B determination (step 6). When the current outside air temperature is lower than 0°C, the target value of the supercooling degree is set to 6 to 9K as supercooling degree A determination (step 7). The target value is set such that when the outside air temperature is low, the supercooling degree becomes greater than that when the outside air temperature is high.

If the current outside air temperature is within the set ranges in steps 6 and 7, the procedure is returned to step 3, and superheat degrees of the main refrigerant circuit and the bypass circuit are determined.

If the current outside air temperature is within the set ranges in steps 6 and 7, the valve opening degree of the main decompressing means 4 and the valve opening degree of the bypass decompressing means 6 are adjusted.

By carrying out the above-described control, it is possible to efficiently operate the heat pump with high ability.

The high pressure detecting means 8 may be omitted, the condensation temperature detecting means may measure a surface temperature of the refrigerant-water heat exchanger 17, and the measured temperature may be used for calculating the average condensation temperature (Tcm). Low pressure detecting means may be provided for calculating the average evaporation temperature (Tem), and the evaporation temperature may be estimated from the measured pressure.

Various materials and numeric values are not limited to those indicated in the embodiment, and other materials and numeric values may be used without any problem if they can play predetermined roles.

### (Second Embodiment)

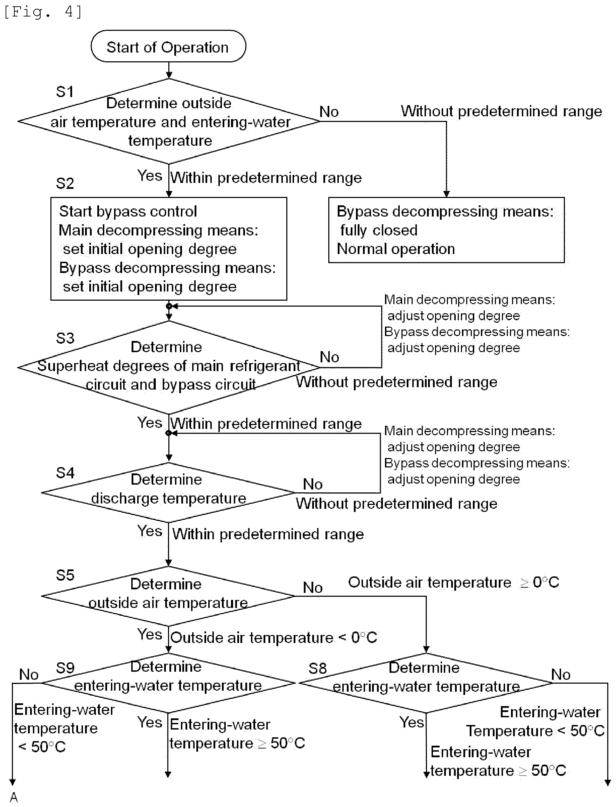

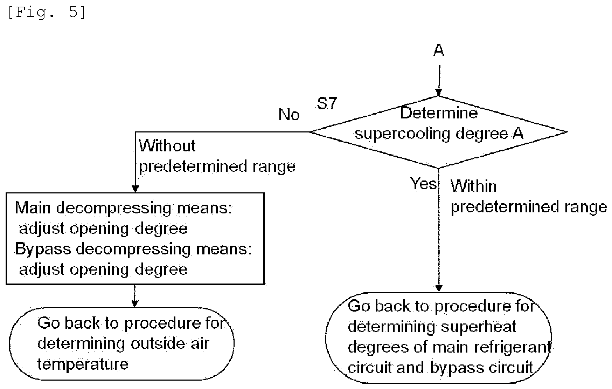

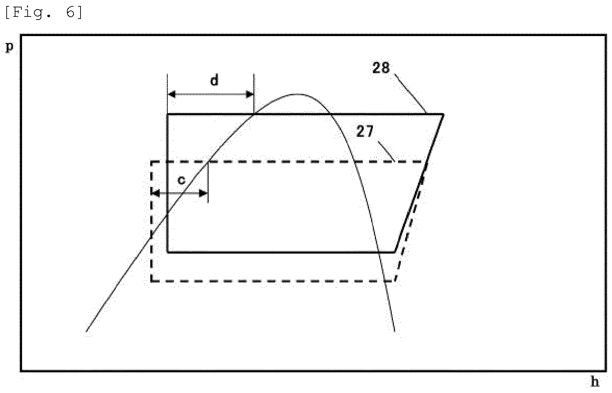

Figs. 4 and 5 are flowcharts when a hydronic heater of a second embodiment of the invention is controlled. Fig. 6 is a Mollier diagram in the second embodiment of the invention. A configuration of the hydronic heater of the second embodiment of the invention is the same as that of the first embodiment. Concerning a control operation, since steps 1 to 5 and 7 are the same as those of the first embodiment, the same step numbers are allocated and explanation thereof will be omitted.

As shown in Fig. 6, if an entering-water temperature becomes high, a refrigeration cycle is changed from a low entering-water temperature-time cycle 27 to a high entering-water temperature-time cycle 28. When the entering-water temperature is high, if attempt is made to obtain the same heating ability as that when the entering-water temperature is low, since a condensation pressure is largely increased, there is a tendency that an optimal value of a supercooling degree is increased from c to d.

Hence, a threshold value (e.g., 0°C) 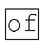 an outside air temperature is added, a threshold value (e.g., 50°C) 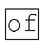 an entering-water temperature is provided, and when the current outside air temperature is equal to or higher than 0°C and the current entering-water temperature is lower than 50°C, a target value of a supercooling degree is set to 4 to 7K, and when the current outside air temperature is equal to or higher than 0°C and the current entering-water temperature is equal to or higher than 50°C, a target value of the supercooling degree is set to 5 to 8K (step 8). When the current outside air temperature is lower than 0°C and the current entering-water temperature is lower than 50°C, a target value of the supercooling degree is set to 6 to 9K, and when the current outside air temperature is lower than 0°C and the current entering-water temperature is equal to or higher than 50°C, a target value of the supercooling degree is set to 7 to 10K (step 9).

When the entering-water temperature is high, the target value is set such that the superheat degree becomes greater than that when the entering-water temperature is low.

By carrying out the above-described control, it is possible to efficiently operate the heat pump with high ability.

Various materials and numeric values are not limited to those indicated in the embodiment, and other materials and numeric values may be used without any problem if they can play predetermined roles.

### [Industrial Applicability]

As described above, since the hydronic heater according to the present invention can keep the refrigeration cycle in its optimal state, the hydronic heater can be applied as hydronic heaters for domestic use and professional use.

## Claims

1. A hydronic heater comprising:
a main refrigerant circuit formed by annularly connecting, to one another through a main refrigerant pipe (16a), a compressor (1), a refrigerant-water heat exchanger (17), a supercooling heat exchanger (5), main decompressing means (4) and an evaporator (3) in this order;
a bypass circuit including a bypass pipe (16b) which branches off from the main refrigerant pipe (16a) extending between the refrigerant-water heat exchanger (17) and the main decompressing means (4), and which is connected to the main refrigerant pipe (16a) extending between the evaporator (3) and the compressor (1) through the supercooling heat exchanger (5);
bypass decompressing means (6) provided in the bypass pipe (16b) located upstream from the supercooling heat exchanger (5);
outside air temperature detecting means (13) which detects an outside air temperature;
water temperature detecting means (21) which detects an entering-water temperature of the refrigerant-water heat exchanger (17); and
control means (14) being adapted to operate a bypass control operation for heat exchanging of a refrigerant carried out by the supercooling heat exchanger (5), **characterised in that** the control means (14) starts a bypass control operation if the outside air temperature detecting means (13) detects a state where the outside air temperature is lower than a given value and if the water temperature detecting means (21) detects a state where a water temperature exceeds a given value,
the control means (14) sets a target value of a supercooling degree of a refrigerant at an outlet of the refrigerant-water heat exchanger (17) at the time of the bypass control operation, such that it judges as to whether or not the outside air temperature detected by the outside air temperature detecting means (13) is more than a threshold value, and the supercooling degree becomes greater, rather when the outside air temperature is less than the threshold value rather than the outside air temperature is more than the threshold value,
the control means (14) is configured to control such that when the supercooling degree of the refrigerant at the outlet of the refrigerant-water heat exchanger (17) at the time of the bypass control operation is smaller than the target value, an opening degree of the bypass decompressing means (6) is adjusted toward its close side while adjusting an opening degree of the main decompressing means (4) toward its open side, thereby increasing the supercooling degree, and
the control means (14) is configured to control such that when the supercooling degree of the refrigerant at the outlet of the refrigerant-water heat exchanger (17) at the time of the bypass control operation is greater than the target value, the opening degree of the bypass decompressing means (6) is adjusted toward its open side while adjusting the opening degree of the main decompressing means (4) toward its close side, thereby reducing the supercooling degree.

2. The hydronic heater according to claim 1, wherein based on the entering-water temperature detected by the water temperature detecting means (21), the control means (14) changes the target value of the supercooling degree of the refrigerant at the outlet of the refrigerant-water heat exchanger (17) when the hydronic heater is operated.

## Patentansprüche

1. Hydronische Heizvorrichtung, umfassend:
einen Hauptkältemittelkreislauf, der gebildet wird, indem ein Kompressor (1), ein Kältemittel-Wasser-Wärmetauscher (17), ein Unterkühlungswärmetauscher (5), eine Hauptdekompressionseinrichtung (4) und ein Verdampfer (3) in dieser Reihenfolge durch ein Hauptkältemittelrohr (16a) ringförmig miteinander verbunden werden;
einen Umgehungskreislauf mit einem Umgehungsrohr (16b), das von dem Hauptkältemittelrohr (16a) abzweigt, das sich zwischen dem Kältemittel-Wasser-Wärmetauscher (17) und der Hauptdekompressionseinrichtung (4) erstreckt, und das über den Unterkühlungswärmetauscher (5) mit dem Hauptkältemittelrohr (16a) verbunden ist, das sich zwischen dem Verdampfer (3) und dem Kompressor (1) erstreckt;
eine Umgehungs-Dekompressionseinrichtung (6), die in der Umgehungsleitung (16b) vorgesehen ist, die sich stromaufwärts von dem Unterkühlungswärmetauscher (5) befindet;
eine Außenlufttemperatur-Erfassungseinrichtung (13), die eine Außenlufttemperatur erfasst;
eine Wassertemperatur-Erfassungseinrichtung (21), die eine Eintrittswassertemperatur des Kältemittel-Wasser-Wärmetauschers (17) erfasst; und
eine Steuereinrichtung (14), die geeignet ist, einen Umgehungs-Steuervorgang für den von dem Unterkühlungswärmetauscher (5) durchgeführten Wärmeaustausch eines Kältemittels zu führen,
**dadurch gekennzeichnet, dass**
die Steuereinrichtung (14) einen Umgehungs-Steuervorgang startet, wenn die Außenlufttemperatur-Erfassungseinrichtung (13) einen Zustand erfasst, in dem die Außenlufttemperatur niedriger als ein vorgegebener Wert ist, und wenn die Wassertemperatur-Erfassungseinrichtung (21) einen Zustand erfasst, in dem eine Wassertemperatur einen vorgegebenen Wert übersteigt,
die Steuereinrichtung (14) einen Sollwert eines Unterkühlungsgrades eines Kältemittels an einem Auslass des Kältemittel-Wasser-Wärmetauschers (17) während des Umgehungs-Steuervorgangs so einstellt, dass sie beurteilt, ob die von der Außenlufttemperatur-Erfassungseinrichtung (13) erfasste Außenlufttemperatur größer als ein Schwellenwert ist, wobei der Unterkühlungsgrad eher dann größer wird, wenn die Außenlufttemperatur kleiner als der Schwellenwert ist, als wenn die Außenlufttemperatur größer als der Schwellenwert ist,
die Steuereinrichtung (14) dafür konfiguriert ist, so zu steuern, dass dann, wenn der Unterkühlungsgrad des Kältemittels am Auslass des Kältemittel-Wasser-Wärmetauschers (17) während des Umgehungs-Steuervorgangs kleiner als der Sollwert ist, ein Öffnungsgrad der Umgehungs-Dekompressionseinrichtung (6) in Richtung zu ihrer geschlossenen Seite verstellt wird, während ein Öffnungsgrad der Hauptdekompressionseinrichtung (4) in Richtung zu ihrer offenen Seite verstellt wird, wodurch der Unterkühlungsgrad erhöht wird, und
die Steuereinrichtung (14) dafür konfiguriert ist, so zu steuern, dass dann, wenn der Unterkühlungsgrad des Kältemittels am Auslass des Kältemittel-Wasser-Wärmetauschers (17) während des Umgehungs-Steuervorgangs größer als der Sollwert ist, der Öffnungsgrad der Umgehungs-Dekompressionseinrichtung (6) in Richtung zu ihrer offenen Seite verstellt wird, während der Öffnungsgrad der Hauptdekompressionseinrichtung (4) in Richtung zu ihrer geschlossenen Seite verstellt wird, wodurch der Unterkühlungsgrad reduziert wird.

2. Hydronische Heizvorrichtung nach Anspruch 1, wobei auf der Grundlage der von der Wassertemperatur-Erfassungseinrichtung (21) erfassten Eintrittswassertemperatur die Steuereinrichtung (14) den Sollwert des Unterkühlungsgrades des Kältemittels am Auslass des Kältemittel-Wasser-Wärmetauschers (17) ändert, wenn die hydronische Heizvorrichtung betrieben wird.

## Revendications

1. Dispositif de chauffage hydronique comprenant :
un circuit principal de fluide frigorigène formé par raccordement annulaire, l'un à l'autre par l'intermédiaire d'un tuyau principal de fluide frigorigène (16a), un compresseur (1), un échangeur de chaleur fluide frigorigène-eau (17), un échangeur de chaleur de sous-refroidissement (5), un moyen de décompression principal (4) et un évaporateur (3), dans cet ordre ;
un circuit de dérivation comprenant un tuyau de dérivation (16b) qui se ramifie à partir du tuyau principal de fluide frigorigène (16a) s'étendant entre l'échangeur de chaleur fluide frigorigène-eau (17) et le moyen de décompression principal (4) et qui est relié au tuyau principal de fluide frigorigène (16a) s'étendant entre l'évaporateur (3) et le compresseur (1) par l'intermédiaire de l'échangeur de chaleur de sous-refroidissement (5) ;
un moyen de décompression de dérivation (6) disposé dans le tuyau de dérivation (16b) situé en amont de l'échangeur de chaleur de sous-refroidissement (5) ;
un moyen de détection de température d'air extérieur (13) qui détecte une température d'air extérieur ;
un moyen de détection de température d'eau (21) qui détecte une température d'eau d'entrée de l'échangeur de chaleur fluide frigorigène-eau (17) ; et
un moyen de commande (14) conçu pour faire fonctionner une opération de commande de dérivation pour l'échange de chaleur d'un fluide frigorigène effectué par l'échangeur de chaleur de sous-refroidissement (5),
**caractérisé en ce que**
le moyen de commande (14) démarre une opération de commande de dérivation si le moyen de détection de température d'air extérieur (13) détecte un état dans lequel la température d'air extérieur est inférieure à une valeur donnée et si le moyen de détection de température d'eau (21) détecte un état dans lequel une température d'eau dépasse une valeur donnée,
le moyen de commande (14) règle une valeur cible d'un degré de sous-refroidissement d'un fluide frigorigène au niveau d'une sortie de l'échangeur de chaleur fluide frigorigène-eau (17) au moment de l'opération de commande de dérivation, de telle sorte qu'il détermine si oui ou non la température d'air extérieur détectée par le moyen de détection de température d'air extérieur (13) est supérieure à une valeur seuil, et le degré de sous-refroidissement devient plus important plutôt lorsque la température d'air extérieur est inférieure à la valeur seuil plutôt que lorsque la température d'air extérieur est supérieure à la valeur seuil,
le moyen de commande (14) est conçu pour commander de telle sorte que lorsque le degré de sous-refroidissement du fluide frigorigène à la sortie de l'échangeur de chaleur fluide frigorigène-eau (17) au moment de l'opération de commande de dérivation est inférieur à la valeur cible, un degré d'ouverture du moyen de décompression de dérivation (6) est ajusté vers son côté fermé tout en ajustant un degré d'ouverture du moyen de décompression principal (4) vers son côté ouvert, ce qui augmente le degré de sous-refroidissement et
le moyen de commande (14) est conçu pour commander de telle sorte que lorsque le degré de sous-refroidissement du fluide frigorigène à la sortie de l'échangeur de chaleur fluide frigorigène-eau (17) au moment de l'opération de commande de dérivation est supérieur à la valeur cible, le degré d'ouverture du moyen de décompression de dérivation (6) est ajusté vers son côté ouvert tout en ajustant le degré d'ouverture du moyen de décompression principal (4) vers son côté fermé, ce qui réduit le degré de sous-refroidissement.

2. Dispositif de chauffage hydronique selon la revendication 1, où, sur la base de la température d'eau d'entrée détectée par le moyen de détection de température d'eau (21), le moyen de commande (14) modifie la valeur cible du degré de sous-refroidissement du fluide frigorigène à la sortie de l'échangeur de chaleur fluide frigorigène-eau (17) lorsque le dispositif de chauffage hydronique est actionné.
